# EUROPEAN PATENT APPLICATION

(11) **EP 3 958 480 A1**
(43) Date of publication of application: **23.02.2022**
(21) Application number: 20818517.3
(22) Date of filing: 05.06.2020
(51) Int. Cl.: H04B 10/077

(54) **SENDING METHOF AND RECEIVING METHOD FOR CONNECTION INFORMATION, OPTICAL MODULE AND CENTRAL PROCESSING DEVICE**

(30) Priority: 06.06.2019 CN 201910492827
(71) Applicant: CHINA MOBILE COMMUNICATION CO., LTD. RESEARCH INSTITUTE, Beijing 100053 (CN); China Mobile Communications Group Co., Ltd, Beijing 100032 (CN)
(72) Inventor: LI, Han, Beijing 100032 (CN); HAN, Liuyan, Beijing 100032 (CN); ZHANG, Dechao, Beijing 100032 (CN); DENG, Chunsheng, Beijing 100032 (CN); WANG, Dong, Beijing 100032 (CN); CAI, Qian, Beijing 100032 (CN); LI, Yunbo, Beijing 100032 (CN)
(74) Representative: J A Kemp LLP
(86) International application number: PCT/CN2020/094676
(87) International publication number: WO 2020/244632

(57) **Abstract**

Provided by the present disclosure are a sending method and receiving method for connection information, an optical module, and a central processing device. The method comprises sending preset optical information for indicating the current connection status of the optical module, the preset optical information comprising information related to the status of a transmission device connected to the optical module..

## Description

### CROSS-REFERENCE TO RELATED APPLICATION

This application claims priority to Chinese patent application No. 201910492827.1, filed on June 6, 2019, the disclosure of which is hereby incorporated by reference in its entirety.

### TECHNICAL FIELD

The present disclosure relates to the technical field of network connection, and in particular, to a connection information sending method and receiving method, an optical module, and a central processing device.

### BACKGROUND

Transmission devices of a network transmission system include Plesiochronous Digital Hierarchy (PDH), Synchronous Digital Hierarchy (SDH), a Packet Transport Network (PTN), an Optical Transport Network (OTN), and other types of transmission devices. The transmission devices may constitute the main part of a metropolitan area network, a backbone network, or the other transmission networks. The transmission communication among the transmission devices should be manageable and controllable, so various types of transmission devices need to be managed and maintained according to their respective own characteristics.

In a related art, a transmission device maintains boards and interfaces of its own devices, and monitor, report, and alarm whether each of the devices of the transmission devices operates normally. In addition, each transmission device indirectly determines a connection relationship between the transmission device and an opposite end by detecting a port of the transmission device. Various transmission devices perform status information interaction through an upper layer protocol, so as to acquire the connection status of the connected opposite ends.

In order to ensure the accuracy and effectiveness of connection detection among the transmission devices, it is desirable to implement the intercommunication of the same type of upper layer protocol information, which requires a relatively complex detection intercommunication protocol to be developed. In addition, since transmission devices of different types or different fields usually cannot support the same type of protocol, for the transmission devices of different types or different fields, it is impossible to implement detection intercommunication by performing status information interaction through the upper layer protocol, thereby resulting in difficulties in fault location.

### SUMMARY

Technical solutions of the present disclosure aim to provide a connection information sending method and receiving method, an optical module, and a central processing device, which are used for solving the problem that transmission devices of different types or different fields cannot implement detection intercommunication by performing status information interaction through an upper layer protocol.

Embodiments of the present disclosure provide a connection information sending method, which is applied to an optical module and includes the following operations.

Preset optical information for indicating a current connection status of the optical module is sent, the preset optical information including information relating to a status of a transmission device connected to the optical module.

Optionally, according to the connection information sending method, the operation of sending the preset optical information for indicating the current connection status of the optical module may include at least one of the following operations.

The preset optical information is sent responsive to that the optical module is powered on.

The preset optical information is sent every preset time interval after the optical module is powered on.

Optionally, according to the connection information sending method, the preset optical information may include at least one of the following information:
wavelength information, transmitted optical power information, or laser bias current information for sending the preset optical information.

Optionally, according to the connection information sending method, the operation of sending the preset optical information for indicating the current connection status of the optical module may include at least one of the following operations.

The preset optical information is sent according to a preset mode.

The sent preset optical information carries a preset identifier.

Optionally, the connection information sending method may further include the following operations.

Service information is sent by adopting an optical transmission channel used in sending the preset optical information.

An information content of the service information is different from an information content of the preset optical information.

Optionally, the connection information sending method may further include the following operations.

The service information is sent by adopting an optical transmission channel other than the optical transmission channel used in sending the preset optical information.

The embodiments of the present disclosure further provide a connection information receiving method, which is applied to a central processing device and includes the following operations.

Preset optical information sent by an optical module is acquired, the preset optical information being used for indicating a connection status of the optical module, and the preset optical information including information relating to a status of a transmission device connected to the optical module.

The connection status of the optical module is determined based on the preset optical information.

Optionally, according to the connection information receiving method, the preset optical information may include at least one of the following information:
wavelength information, transmitted optical power information, or laser bias current information for sending the preset optical information.

Optionally, according to the connection information receiving method, the operation of acquiring the preset optical information sent by the optical module may include at least one of the following operations.

The preset optical information sent by the optical module according to a preset mode is acquired.

The preset optical information which is sent by the optical module and carries a preset identifier is acquired.

Optionally, the connection information receiving method, after the operation of acquiring the preset optical information sent by the optical module, may further include the following operations.

It is detected whether the preset optical information is sent according to the preset mode and/or whether the preset optical information carries the preset identifier.

In response to that the preset optical information is sent according to the preset mode and/or the preset optical information carries the preset identifier, the connection status of the optical module is determined based on the preset optical information.

In response to that the preset optical information is not sent according to the preset mode and the preset optical information does not carry the preset identifier, the preset optical information is ignored and/or a warning is issued.

Optionally, according to the connection information receiving method, the operation of determining the connection status of the optical module based on the preset optical information may include the following operations.

Responsive to at least one of a condition that the preset optical information is not received for a preset time interval or a condition that the received preset optical information conforms to a preset abnormal status, it is determined that that the connection status of the optimal module is abnormal.

The embodiments of the present disclosure also provide an optical sending unit. The optical sending unit is configured to:
send preset optical information for indicating a current connection status of the optical module, the preset optical information including information relating to a status of a transmission device connected to the optical module.

Optionally, according to the optical module, the operation that the optical sending unit sends the preset optical information for indicating the current connection status of the optical module may include at least one of the following operations.

The preset optical information is sent responsive to that the optical module is powered on.

The preset optical information is sent every preset time interval after the optical module is powered on.

Optionally, according to the optical module, the preset optical information may include at least one of the following information:
wavelength information, transmitted optical power information, or laser bias current information for sending the preset optical information.

Optionally, according to the optical module, the operation that the optical sending unit sends the preset optical information for indicating the current connection status of the optical module may include at least one of the following operations.

The preset optical information is sent according to a preset mode.

The sent preset optical information carries a preset identifier.

The embodiments of the present disclosure also provide a central processing device, which may include an optical receiving unit and a processing unit.

The optical receiving unit is configured to acquire preset optical information sent by an optical module, the preset optical information being used for indicating a connection status of the optical module, and the preset optical information including information relating to a status of a transmission device connected to the optical module.

The processing unit is configured to determine the connection status of the optical module based on the preset optical information.

Optionally, according to the central processing device, the preset optical information may include at least one of the following information:
wavelength information, transmitted optical power information, or laser bias current information for sending the preset optical information.

Optionally, according to the central processing device, the operation that the optical receiving unit acquires the preset optical information sent by the optical module may include at least one of the following operations.

The preset optical information sent by the optical module according to a preset mode is acquired.

The preset optical information which is sent by the optical module and carries a preset identifier is acquired.

Optionally, according to the central processing device, after the optical receiving unit acquires the preset optical information sent by the optical module, the processing unit is further configured to:
detect whether the preset optical information is sent according to the preset mode and/or whether the preset optical information carries the preset identifier;
in response to that the preset optical information is sent according to the preset mode and/or the preset optical information carries the preset identifier,, determining the connection status of the optical module based on the preset optical information;
in response to that the preset optical information is not sent according to the preset mode and the preset optical information does not carry the preset identifier, ignoring the preset optical information is ignored and/or issuing a warning.

Optionally, according to the central processing device, the operation that the processing unit determines the connection status of the optical module based on the preset optical information may include the following operations.

Responsive to at least one of a condition that the preset optical information is not received for a preset time interval or a condition that the received preset optical information conforms to a preset abnormal status, it is determined that the connection status of the optimal module is abnormal.

The embodiments of the present disclosure also provide a wavelength division multiplexing system, which may include an optical module and a central processing device.

The optical module is configured to send preset optical information for indicating a current connection status of the optical module.

The central processing device is configured to acquire the preset optical information sent by the optical module, the preset optical information being used for indicating the connection status of the optical module, and the preset optical information including information relating to a status of a transmission device connected to the optical module; and the central processing device being further configured to determine the connection status of the optical module based on the preset optical information.

Optionally, according to the wavelength division multiplexing system,
the optical module performs at least one of the following operations including sending the preset optical information according to a preset mode, or carrying a preset identifier by the sent preset optical information.

After acquiring the preset optical information sent by the optical module, the central processing unit is further configured to: detect whether the preset optical information is sent according to the preset mode and/or whether the preset optical information carries the preset identifier; in response to that the preset optical information is sent according to the preset mode and/or the preset optical information carries the preset identifier, determine the connection status of the optical module based on the preset optical information; and in response to that the preset optical information is not sent according to the preset mode and the preset optical information does not carry the preset identifier, ignore the preset optical information, and/or issue a warning.

Optionally, the wavelength division multiplexing system may further include an optical multiplexing unit and an optical demultiplexing unit connected to the optical multiplexing unit through an optical fiber.

The optical module may include a plurality of optical modules. The plurality of the optical modules are respectively connected to the optical multiplexing unit, and the central processing device is connected to the optical demultiplexing unit.

The embodiments of the present disclosure also provide a transmission device, which may include an optical module as described in any one of the above, or include a central processing device as described in any one of the above.

The embodiments of the present disclosure further provide an optical module, including a memory, a processor, and a computer program which is stored in the memory and is executable on the processor. When executing the program, the processor implements a connection information sending method as described in any one of the above.

The embodiments of the present disclosure further provide a central processing device, including a memory, a processor, and a computer program which is stored in the memory and is executable on the processor. When executing the program, the processor implements a connection information receiving method as described in any one of the above.

The embodiments of the present disclosure further provide a computer readable storage medium including a computer program. When executed by a processor, the program implements an operation of a connection information sending method as described in any one of the above, or implements an operation of a connection information receiving method as described in any one of the above.

At least one of the technical solutions of the present disclosure has the following beneficial effects.

According to the connection information sending method in the embodiments of the present disclosure, an optical module which can be installed on a transmission device is used for sending optical information to indicate a current connection status of the optical module, and status information interaction between the transmission devices may be implemented through sending the optical information by the optical module. No matter what type of transmission device the optical module is built in, opposite end devices connected to the transmission devices may acquire the connection status of the transmission devices, which eliminates the need for an upper layer protocol, thereby avoiding the problem that the transmission devices of different types or different fields cannot implement detection intercommunication by performing status information interaction through the upper layer protocol.

### BRIEF DESCRIPTION OF THE DRAWINGS

FIG. 1 is a first schematic structure diagram of a system to which a connection information sending method is applied according to an embodiment of the present disclosure.
FIG. 2 is a second schematic structure diagram of a system to which a connection information sending method is applied according to an embodiment of the present disclosure.
FIG. 3 is a schematic flowchart of an implementation of a connection information sending method according to an embodiment of the present disclosure.
FIG. 4 is a schematic flowchart of another implementation of another connection information sending method according to an embodiment of the present disclosure.
FIG. 5 is an implementation schematic structure diagram of an optical module according to an embodiment of the present disclosure.
FIG. 6 is an implementation schematic structure diagram of a central processing device according to an embodiment of the present disclosure.
FIG. 7 is another implementation schematic structure diagram of an optical module according to an embodiment of the present disclosure.
FIG. 8 is another implementation schematic structure diagram of a central processing device according to an embodiment of the present disclosure.

### DETAILED DESCRIPTION

In order to make the to-be-solved technical problems, technical solutions, and advantages of the present disclosure clearer, detailed descriptions are made below with reference to the accompanying drawings and specific embodiments.

In order to solve the problem that transmission devices of different types or different fields cannot implement detection intercommunication by performing status information interaction through an upper layer protocol, the embodiments of the present disclosure provide a connection information sending method. An optical module which can be installed on a transmission device is used for sending optical information to indicate a current connection status of the optical module, so that an opposite end device connected to the transmission device may acquire a connection status of the transmission device.

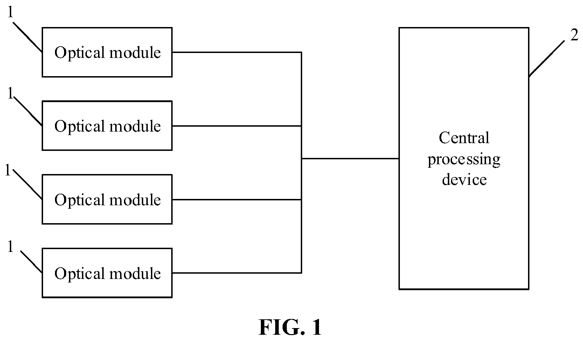

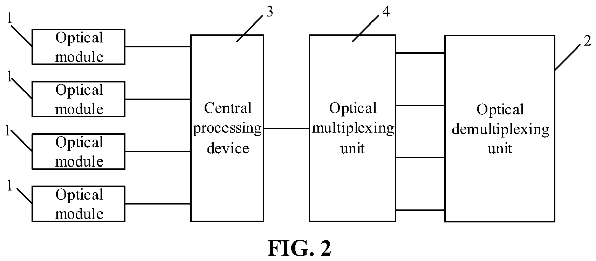

FIG. 1 is a first schematic structure diagram of a system to which a connection information sending method is applied according to an embodiment of the present disclosure. FIG. 2 is a second schematic structure diagram of a system to which a connection information sending method is applied according to an embodiment of the present disclosure. Referring to FIG. 1 and FIG. 2, in the embodiment of the present disclosure, the system to which the connection information sending method is applied may include an optical module 1 and a central processing device 2. Optionally, the optical module 1 may be installed in a transmission device of a network system. Specifically, the optical module 1 may be integrally installed on the transmission device, or may be connected to the transmission device in a plugged mode through a connection interface. The central processing device 2 may be installed in another transmission device of the network system, or may be independently installed on a control device.

Referring to FIG. 1, when the wavelengths of optical information sent by multiple optical modules 1 in the network system are the same, one central processing device 2 in the network system may be directly connected to the multiple optical modules 1 through optical fibers, and each optical module 1 may send optical information to the connected central processing device 2 through an optical fiber.

Referring to FIG. 2, when the wavelengths of the optical information sent by the multiple optical modules 1 in the network system are different, the system to which the connection information sending method is applied may further include: an optical multiplexing unit 3 and an optical demultiplexing unit 4. The optical multiplexing unit 3 may be connected to the optical demultiplexing unit 4 through an optical fiber. The multiple optical modules 1 may be connected to one optical multiplexing unit 3. Through the optical multiplexing unit 3, the optical information with different wavelengths sent by the multiple optical modules 1 may be multiplexed into one path of optical information. The one path of optical information may be transmitted to the optical demultiplexing unit 4 through the optical fiber. The optical demultiplexing unit 4 may split the one path of optical information, which includes the optical information with different wavelengths and is transmitted by the optical fiber, and then transmit it to the central processing device 2.

Optionally, the optical multiplexing unit 3 may be integrated on a transmission device, or may be connected to the transmission device in the plugged mode through the connection interface. Alternatively, the optical multiplexing unit 3 may also be independently arranged relative to the transmission device. Optionally, the optical demultiplexing unit 4 may be integrated on a transmission device, may be connected to a transmission device in a plugged mode through a connection interface, may be integrally connected to the central processing device 2, or may be independently arranged relative to the transmission device.

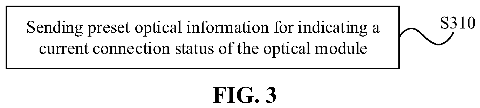

Based on the system including the above implementation structure for implementing the connection information sending method described in the embodiment of the present disclosure, the embodiment of the present disclosure provides a connection information sending method. In one implementation, as shown in FIG. 3, the method may be applied to an optical module, including the following operations.

At S310, preset optical information for indicating a current connection status of the optical module may be sent. The preset optical information may include information relating to a status of a transmission device connected to the optical module.

Referring to FIG. 1 and FIG. 2, the optical module 1 may send the preset optical information indicating the current connection status, so that the central processing device 2 that is connected to the optical module 1 through an optical fiber may acquire the current connection status of the optical module 1. On this basis, based on the current connection status of the optical module 1, a communication status of the transmission device connected to the optical module 1 may be acquired.

By adopting the above mode, a status information interaction among the transmission devices may be implemented through sending the optical information by the optical module. No matter what type of transmission device the optical module is built in, an opposite end device connected to the transmission device may acquire the communication status of the transmission device. Thus, it is unnecessary to adopt the upper layer protocol, which can avoid the problem that the transmission devices of different types or different fields cannot implement detection intercommunication by performing the status information interaction through the upper layer protocol.

Optionally, in the embodiment of the present disclosure, the preset optical information, which is sent by the optical module and used for indicating the current connection status of the optical module, may be monitoring information of the optical module itself. Herein, the preset optical information may not include a configuration or setting process when the optical module sends the optical information. As used herein, "preset" means that the optical information sent by the optical module for indicating the current connection status is a piece of specific information. A form of the specific information may be pre-configured in the optical module. The form of the preset optical information may be not limited as long as distinguishing the preset optical information from service information sent by the optical module, so that the central processing device may recognize the received optical information for indicating the current connection status of the optical module.

Optionally, at S310, the operation of sending the preset optical information for indicating the current connection status of the optical module may include the following operations.

The preset optical information may be sent responsive to that the optical module is powered on.

Additionally or alternatively, the preset optical information may be sent every preset time interval after the optical module is powered on.

Optionally, the optical module may automatically trigger the sending of the preset optical information as soon as it is powered on, and continue to send the preset optical information every preset time interval during a running process after the optical module is powered on, so that the central processing device may monitor and acquire the communication status of the transmission device on which the optical module is installed in real time.

In the embodiment of the present disclosure, optionally, the preset optical information may include wavelength information, transmitted optical power information, and/or laser bias current information for sending the preset optical information, namely including at least one of the wavelength information, the transmitted optical power information, or the laser bias current information.

Specifically, through providing the preset optical information with preset wavelength information, preset transmitted optical power information, and/or laser bias current information when sending the preset optical information, the preset optical information sent by the optical module for indicating the current connection status of the optical module may be distinguished from other service information, and the central processing device may recognize that the received optical information is the preset optical information.

Optionally, at S310, the operation of sending the preset optical information for indicating the current connection status of the optical module may include the following operations.

The preset optical information may be sent according to a preset mode.

Additionally or alternatively, the sent preset optical information may carry a preset identifier.

Specifically, the preset mode of sending the preset optical information by the optical module and the carried preset identifier may be determined through a negotiation with the central processing device. By determining that the optical module sends the preset optical information according to the preset mode and/or the preset optical information needs carry the preset identifier through the negotiation in advance, the central processing device may recognize the sent optical module according to the preset mode of sending the preset optical information and/or the preset identifier carried by the preset optical information, thereby further recognizing the transmission device on which the optical module is installed and determining the communication status of the corresponding transmission device.

In addition, the central processing device may also verify the received optical information according to the preset mode of sending the preset optical information and/or the preset identifier carried by the preset optical information. The optical module for sending the optical information may be determined as a legal optical module only when the received optical information passes the verification. Otherwise, the optical module for sending the optical information may be determined as an illegal optical module, the received optical module may be rejected, and a warning may be issued.

Optionally, the preset mode of sending the preset optical information and the preset identifier carried in the preset optical information may be determined according to a preset configuration, as long as a receiving end (the central processing device) of the preset optical information may recognize that what is received is the optical information for indicating the current connection status of the optical module.

Optionally, the connection information sending method in the embodiment of the present disclosure may further include the following operations.

Service information may be sent by adopting the optical transmission channel used in sending the preset optical information.

An information content of the service information may be different from an information content of the preset optical information.

Optionally, the connection information sending method in the embodiment of the present disclosure may further include the following operations.

The service information may be sent by adopting an optical transmission channel other than the optical transmission channel used in sending the preset optical information.

Through the abovementioned mode, the preset optical information sent by the optical module for indicating the current connection status of the optical module and the sent service information may use the same one optical transmission channel, but the service information and the preset optical information may have different information contents. Alternatively, the preset optical information for indicating the current connection status of the optical module and the sent service information may be sent through different optical transmission channels, such as using different modulation carrier frequencies, as long as the sent preset optical information may be distinguished from the service information.

By adopting the connection information sending method in the embodiment of the present disclosure, the optical module which can be installed on the transmission device may be used for sending the optical information to indicate the current connection status of the optical module. No matter what type of transmission device the optical module is built in, the opposite end device connected to the transmission device may acquire the connection status of the transmission device, so that the status information interaction among the transmission devices of different types or different fields can be implemented, thereby achieving detection intercommunication.

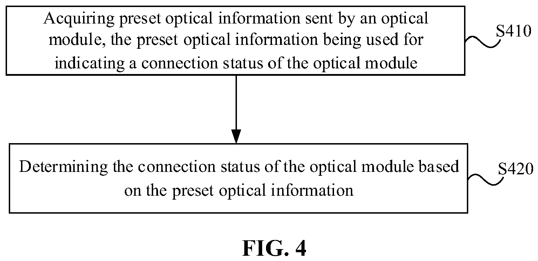

The embodiment of the present disclosure provides a connection information sending method. In another implementation, as shown in FIG. 4, the method may be applied to a central processing device, including the following operations.

At S410, preset optical information sent by an optical module may be acquired. The preset optical information may be used for indicating a connection status of the optical module.

At S420, the connection status of the optical module may be determined based on the preset optical information.

Referring to FIG. 1 and FIG. 2, by adopting the connection information sending method in the embodiment of the present disclosure, the optical module 1 may send the preset optical information indicating the current connection status, so that the central processing device 2 connected to the optical module 1 through an optical fiber may acquire the current connection status of the optical module 1. On this basis, based on the current connection status of the optical module 1, a communication status of the transmission device connected to the optical module 1 may be acquired. Therefore, a status information interaction among the transmission devices may be implemented through sending the optical information by the optical module 1. No matter what type of transmission device the optical module is built in, the opposite end device (the central processing device 2) connected to the transmission device may acquire the communication status of the transmission device. Thus, it is unnecessary to adopt the upper layer protocol, which can avoid the problem that the transmission devices of different types or different fields cannot implement detection intercommunication by performing the status information interaction through the upper layer protocol.

Optionally, at S410, the acquired preset optical information may be sent responsive to that the optical module is powered on, and/or may be sent every preset time interval after the optical module is powered on.

Optionally, the optical module may automatically trigger the sending of the preset optical information as soon as it is powered on, and continue to send the preset optical information every preset time interval during a running process after the optical module is powered on, so that the central processing device may monitor and acquire the communication status of the transmission device on which the optical module is installed in real time.

Optionally, the preset optical information may include wavelength information, transmitted optical power information, and/or laser bias current information for sending the preset optical information.

Specifically, through providing the preset optical information with preset wavelength information, preset transmitted optical power information, and/or laser bias current information when sending the preset optical information, the preset optical information sent by the optical module for indicating the current connection status of the optical module may be distinguished from other service information, and the central processing device may recognize that the received optical information is the preset optical information.

Optionally, at S410, the operation of acquiring the preset optical information sent by the optical module may include the following operations.

The preset optical information sent by the optical module according to a preset mode may be acquired.

Additionally or alternatively, the preset optical information which is sent by the optical module and carries a preset identifier may be acquired.

Specifically, the preset mode of sending the preset optical information by the optical module and the carried preset identifier may be determined through a negotiation with the central processing device. By determining that the optical module sends the preset optical information according to the preset mode and/or the preset optical information needs to carry the preset identifier through the negotiation in advance, the central processing device may recognize the sent optical module according to the preset mode of sending the preset optical information and/or the preset identifier carried by the preset optical information, thereby further recognizing the transmission device on which the optical module is installed and determining the communication status of the corresponding transmission device.

Optionally, after the operation of acquiring the preset optical information sent by the optical module, the method may further include the following operations.

It may be detected whether the preset optical information is sent according to the preset mode and/or whether the preset optical information carries the preset identifier.

In response to that the preset optical information is sent according to the preset mode and/or the preset optical information carries the preset identifier, the connection status of the optical module may be determined based on the preset optical information.

In response to that the preset optical information is not sent according to the preset mode and the preset optical information does not carry the preset identifier, the preset optical information may be ignored and/or a warning may be issued.

In addition, the central processing device may also verify the received optical information according to the preset mode of sending the preset optical information and/or the preset identifier carried by the preset optical information. The optical module for sending the optical information may be determined as a legal optical module only when the received optical information passes the verification. Otherwise, the optical module for sending the optical information may be determined as an illegal optical module, the received optical module may be rejected, and a warning may be issued.

Optionally, at S420, the operation of determining the connection status of the optical module based on the preset optical information may include the following operations.

Responsive to that the preset optical information is not received for a preset time interval and/or the received preset optical information conforms to a preset abnormal status, the connection status of the optical module may be determined to be abnormal.

Specifically, after receiving the preset optical information of the optical module, if the central processing device can receive the preset optical information sent by the optical module every preset time interval and the preset optical information does not conform to the preset abnormal status, the connection status of the optical module may be determined to be normal. If the preset optical information sent by the optical module is not received for the preset time interval, or the received preset optical information conforms to the preset abnormal status (for example, the transmitted optical power is too low), the connection status of the optical module may be determined to be abnormal.

Optionally, the connection information sending method in the embodiment of the present disclosure may further include the following operations.

Service information sent by the optical module may be acquired by adopting the optical transmission channel used in sending the preset optical information.

An information content of the service information may be different from an information content of the preset optical information.

Optionally, the connection information sending method in the embodiment of the present disclosure may further include the following operations.

The service information sent by the optical module may be acquired by adopting an optical transmission channel other than the optical transmission channel used in sending the preset optical information.

By adopting the connection information sending method in the embodiment of the present disclosure, the status information interaction among the transmission devices of different types or different fields can be implemented.

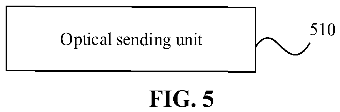

One embodiment of the present disclosure also provides an optical module, as shown in FIG. 5. The optical module may include an optical sending unit 510. The optical sending unit 510 may be configured to perform the following operations.

Preset optical information for indicating a current connection status of the optical module may be sent. The preset optical information may include information relating to a status of a transmission device connected to the optical module.

By adopting the optical module in the embodiment of the present disclosure, a status information interaction among the transmission devices may be implemented through sending the optical information by the optical module. No matter what type of transmission device the optical module is built in, an opposite end device connected to the transmission device may acquire a communication status of the transmission device. Thus, it is unnecessary to adopt an upper layer protocol, which can avoid the problem that the transmission devices of different types or different fields cannot implement detection intercommunication by performing the status information interaction through the upper layer protocol.

Optionally, according to the optical module, the operation that the optical sending unit 510 sends the preset optical information for indicating the current connection status of the optical module may include the following operations.

The preset optical information may be sent responsive to that the optical module is powered on.

Additionally or alternatively, the preset optical information may be sent every first preset time interval after the optical module is powered on.

Optionally, according to the optical module, the preset optical information may include wavelength information, transmitted optical power information, and/or laser bias current information for sending the preset optical information.

Optionally, according to the optical module, the operation that the optical sending unit sends the preset optical information for indicating the current connection status of the optical module may include the following operations.

The preset optical information may be sent according to a preset mode.

Additionally or alternatively, the sent preset optical information may carry a preset identifier.

Optionally, according to the optical module, the optical sending unit 510 may be further configured to perform the following operations.

Service information may be sent by adopting an optical transmission channel used in sending the preset optical information.

An information content of the service information may be different from an information content of the preset optical information.

Optionally, according to the optical module, the optical sending unit 510 may be further configured to perform the following operations.

The service information may be sent by adopting an optical transmission channel other than the optical transmission channel used in sending the preset optical information.

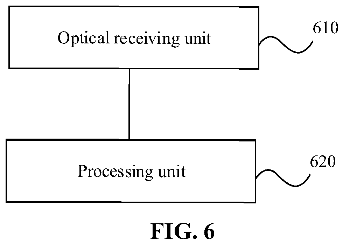

Another embodiment of the present disclosure also provides a central processing device, as shown in FIG. 6. The central processing device may include an optical receiving unit 610 and a processing unit 620.

The optical receiving unit 610 may be configured to acquire preset optical information sent by an optical module. The preset optical information may be used for indicating a connection status of the optical module.

The processing unit 620 may be configured to determine the connection status of the optical module based on the preset optical information.

By adopting the central processing device in the embodiment of the present disclosure, the optical module may send the preset optical information indicating the current connection status, so that the central processing device connected to the optical module through an optical fiber may acquire the current connection status of the optical module. On this basis, based on the current connection status of the optical module, a communication status of the transmission device connected to the optical module may be acquired. Therefore, a status information interaction among the transmission devices may be implemented through sending the optical information by the optical module. No matter what type of transmission device the optical module is built in, an opposite end device (the central processing device) connected to the transmission device may acquire the communication status of the transmission device. Thus, it is unnecessary to adopt an upper layer protocol, which can avoid the problem that the transmission devices of different types or different fields cannot implement detection intercommunication by performing the status information interaction through the upper layer protocol.

Optionally, according to the central processing device, the preset optical information may include wavelength information, transmitted optical power information, and/or laser bias current information for sending the preset optical information.

Optionally, according to the central processing device, the operation that the optical receiving unit acquires the preset optical information sent by the optical module may include the following operations.

The preset optical information sent by the optical module according to a preset mode may be acquired.

Additionally or alternatively, the preset optical information which is sent by the optical module and carries a preset identifier may be acquired.

Optionally, according to the central processing device, after the optical receiving unit 610 acquires the preset optical information sent by the optical module, the processing unit 620 may be further configured to perform the following operations.

It may be detected whether the preset optical information is sent according to the preset mode and/or whether the preset optical information carries the preset identifier.

In response to that the preset optical information is sent according to the preset mode and/or the preset optical information carries the preset identifier, the connection status of the optical module may be determined based on the preset optical information.

In response to that the preset optical information is not sent according to the preset mode and the preset optical information does not carry the preset identifier, the preset optical information may be ignored and/or a warning may be issued.

Optionally, according to the central processing device, the operation that the processing unit determines the connection status of the optical module based on the preset optical information may include the following operations.

Responsive to that the preset optical information is not received for a preset time interval and/or the received preset optical information conforms to a preset abnormal status, the connection status of the optical module may be determined to be abnormal.

Another embodiment of the present disclosure also provides a wavelength division multiplexing system. The wavelength division multiplexing system may include an optical module as described in any one of the above and a central processing device as described in any one of the above. In addition, according to one implementation structure of the wavelength division multiplexing system as shown in FIG. 1, the wavelengths of optical information sent by multiple optical modules 1 may be the same, one central processing device 2 may be directly connected to the multiple optical modules 1 through optical fibers, and each optical module 1 may send the optical information to the connected central processing device 2 through its corresponding optical fiber.

In addition, according to another implementation structure of the wavelength division multiplexing system as shown in FIG. 2, the wavelength division multiplexing system may further include an optical multiplexing unit 3 and an optical demultiplexing unit 4 connected to the optical multiplexing unit 3 through an optical fiber.

A plurality of the optical modules 1 may be respectively connected to the optical multiplexing unit 3. The central processing device 2 may be connected to the optical demultiplexing unit 4.

By adopting the implementation structure, the wavelengths of the optical information sent by the plurality of optical modules may be different. The plurality of optical modules 1 may be connected to one optical multiplexing unit 3.. Through the optical multiplexing unit 3, the optical information with different wavelengths sent by the multiple optical modules 1 may be multiplexed into one path of optical information. The one path of optical information may be transmitted to the optical demultiplexing unit 4 through the optical fibers. The optical demultiplexing unit 4 may split the one path of optical information, which includes the optical information with different wavelengths and is transmitted by the optical fiber, and then transmit it to the central processing device 2.

Specifically, the wavelength division multiplexing system may include an optical module and a central processing device.

The optical module may be configured to send preset optical information for indicating a current connection status of the optical module.

The central processing device may be configured to acquire the preset optical information sent by the optical module. The preset optical information may be used for indicating the connection status of the optical module. The preset optical information may include information relating to a status of a transmission device connected to the optical module. The central processing device may further be configured to determine the connection status of the optical module based on the preset optical information.

Optionally, according to the wavelength division multiplexing system:
the optical module may send the preset optical information according to a preset mode when sending the preset optical information, and/or carry a preset identifier by the sent preset optical information.

After acquiring the preset optical information sent by the optical module, the central processing unit may be further configured to: detect whether the preset optical information is sent according to the preset mode and/or whether the preset optical information carries the preset identifier; in response to that the preset optical information is sent according to the preset mode and/or the preset optical information carries the preset identifier, determine the connection status of the optical module based on the preset optical information; and in response to that the preset optical information is not sent according to the preset mode and the preset optical information does not carry the preset identifier, ignore the preset optical information and/or issue a warning.

Optionally, according to the wavelength division multiplexing system, the central processing unit may be further configured to perform the following operations.

Responsive to that the preset optical information is not received for a preset time interval and/or the received preset optical information conforms to a preset abnormal status, the connection status of the optical module may be determined to be abnormal.

Optionally, according to the wavelength division multiplexing system, when sending the preset optical information for indicating the current connection status of the optical module, the optical module may be further configured to adopt an optical transmission channel used in sending the preset optical information to send service information. An information content of the service information may be different from an information content of the preset optical information. Alternatively, the optical module may be configured to adopt an optical transmission channel other than the optical transmission channel used in sending the preset optical information to send the service information.

It is to be noted that in the wavelength division multiplexing system according to the embodiment of the present disclosure, other functions of the optical module and the central processing unit may be referred to the above detailed descriptions, and will not be described here. By adopting the wavelength division multiplexing system according to the embodiment of the present disclosure, when the central processing device and the optical module are applied to a transmission device, through the mutual cooperation between the central processing device and the optical module, the communication status may be acquired based on the information of the optical module no matter what type of transmission device the applied transmission device is, thereby realizing detection intercommunication among different types of transmission devices.

Another embodiment of the present disclosure also provides a transmission device. The transmission device may include an optical module as described in any one of the above, or a central processing device as described in any one of the above.

The specific structures of the optical module and the central processing device are as described above, and will not be described in detail here.

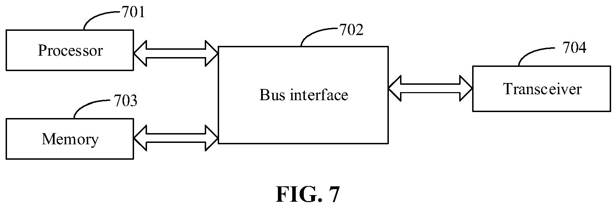

The embodiments of the present disclosure also provide an optical module, as shown in FIG. 7. The optical module may include a processor 701 and a memory 703 connected to the processor 701 through a bus interface 702. The memory 703 may be configured to store programs and data used by the processor 701 when executing operations. The processor 701 may call and execute the programs and data stored in the memory 703.

A transceiver 704 may be connected to the bus interface 702 and configured to receive and send data under the control of the processor 701. Specifically, the processor 701 may be configured to read the programs in the memory 703 and execute the following procedures.

Preset optical information for indicating a current connection status of the optical module may be sent. The preset optical information may include information relating to a status of a transmission device connected to the optical module.

Optionally, according to the optical module, the operation that the processor 701 sends the preset optical information for indicating the current connection status of the optical module may include the following operations.

The preset optical information may be sent responsive to that the optical module is powered on.

Additionally or alternatively, the preset optical information may be sent every preset time interval after the optical module is powered on.

Optionally, according to the optical module, the preset optical information may include at least one of the following information: wavelength information, transmitted optical power information, or laser bias current information for sending the preset optical information.

Optionally, according to the optical module, the operation that the processor 701 sends the preset optical information for indicating the current connection status of the optical module may include the following operations.

The preset optical information may be sent according to a preset mode.

Additionally or alternatively, the sent preset optical information may carry a preset identifier.

Optionally, according to the optical module, the processor 701 may be further configured to:

send service information by adopting an optical transmission channel used in sending the preset optical information.

An information content of the service information may be different from an information content of the preset optical information.

Optionally, according to the optical module, the processor 701 may be further configured to:
send the service information by adopting an optical transmission channel other than the optical transmission channel used in sending the preset optical information.

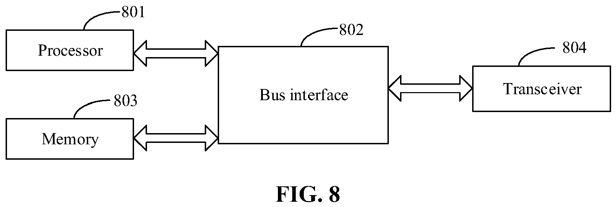

Further, the embodiments of the present disclosure also provide a central processing device, as shown in FIG. 8. The central processing device may include: a processor 801 and a memory 803 connected to the processor 801 through a bus interface 802. The memory 803 may be configured to store programs and data used by the processor 801 when executing operations. The processor 801 may call and execute the programs and data stored in the memory 803.

A transceiver 804 may be connected to the bus interface 802 and configured to receive and send data under the control of the processor 801. Specifically, the processor 801 may be configured to read the programs in the memory 803 and execute the following procedures.

Preset optical information sent by an optical module may be acquired. The preset optical information may be used for indicating a connection status of the optical module.

The connection status of the optical module may be determined based on the preset optical information.

Optionally, according to the central processing device, the preset optical information may include at least one of the following information:
wavelength information, transmitted optical power information, or laser bias current information for sending the preset optical information.

Optionally, according to the central processing device, the operation that the processor 801 acquires the preset optical information sent by the optical module may include the following operations.

The preset optical information sent by the optical module according to a preset mode may be acquired.

Additionally or alternatively, the preset optical information which is sent by the optical module and carries a preset identifier may be acquired.

Optionally, according to the central processing device, after acquiring the preset optical information sent by the optical module, the processor 801 may be further configured to:
detect whether the preset optical information is sent in the preset mode and/or whether the preset optical information carries the preset identifier;
in response to that the preset optical information is sent according to the preset mode and/or the preset optical information carries the preset identifier, the connection status of the optical module may be determined based on the preset optical information.
in response to that the preset optical information is not sent according to the preset mode and the preset optical information does not carry the preset identifier, the preset optical information may be ignored and/or a warning may be issued.

Optionally, according to the central processing device, the operation that the processor 801 determines the connection status of the optical module based on the preset optical information may include the following operations.

Responsive to that the preset optical information is not received for a preset time interval and/or the received preset optical information conforms to a preset abnormal status, the connection status of the optical module may be determined to be abnormal.

Those skilled in the art may understand that all or part of the operations to implement the above embodiments may be completed by hardware, and may also be completed by a program indicating related hardware. The program may include an instruction to execute part or all of the operations of the above methods. The program may be stored in a readable storage medium, and the storage medium may be any form of storage medium.

In addition, the specific embodiments of the present disclosure further provide a computer readable storage medium, on which a computer program is stored. When executed by a processor, the program may implement an operation of a connection information sending method as described in any one of the above, or implements an operation of a connection information receiving method as described in any one of the above.

In several embodiments provided by the present disclosure, it should be understood that the disclosed methods and apparatuses may be implemented in other ways. For example, the device embodiment described above is only schematic. For example, a division of the units is only a logic function division, and other division manners may be adopted during practical implementation. For example, multiple units or components may be combined or integrated into another system, or some characteristics may be neglected or not executed. In addition, coupling, direct coupling, or communication connection between components as displayed or described may be indirect coupling or communication connection implemented through some interfaces, devices, or units, and may be electrical, mechanical, or other forms.

In addition, functional units in the embodiments of the present disclosure may be integrated into a processing unit, each of the units may be physically included independently in the processing unit, or two or more units may be integrated into a single unit. The integrated unit may be implemented in a hardware form and may also be implemented in form of a hardware and software functional unit.

The integrated unit realized in form of a software functional unit may be stored in a computer-readable storage medium. The above-mentioned software functional unit may be stored in a storage medium, and may include a plurality of instructions to enable a computer device (which may be a personal computer, a server, or a network device, etc.) to execute some operations of the sending and receiving methods described in various embodiments of the present disclosure. The above-mentioned storage medium may include: various media capable of storing program codes such as a U disk, a mobile hard disk, a Read-Only Memory (ROM), a Random Access Memory (RAM), a magnetic disk, or an optical disk.

The above is the preferred implementation of the present disclosure. It is to be pointed out that those ordinary skilled in the art may further make a plurality of improvements and embellishments without departing from the principle of the present disclosure and these improvements and embellishments shall also fall within the scope of protection of the present disclosure.

## Claims

1. A connection information sending method applied to an optical module, comprising:
sending preset optical information for indicating a current connection status of the optical module, the preset optical information comprising information relating to a status of a transmission device connected to the optical module.

2. The connection information sending method of claim 1, wherein sending the preset optical information for indicating the current connection status of the optical module comprises at least one of:
sending the preset optical information responsive to that the optical module is powered on; or
sending the preset optical information every preset time interval after the optical module is powered on.

3. The connection information sending method of claim 1, wherein the preset optical information comprises at least one of:
wavelength information, transmitted optical power information, or laser bias current information for sending the preset optical information.

4. The connection information sending method of claim 1, wherein sending the preset optical information for indicating the current connection status of the optical module comprises at least one of:
sending the preset optical information according to a preset mode; or
carrying a preset identifier by the sent preset optical information.

5. The connection information sending method of claim 1, further comprising:
sending service information by adopting an optical transmission channel used in sending the preset optical information,
wherein an information content of the service information is different from an information content of the preset optical information.

6. The connection information sending method of claim 1, further comprising:
sending service information by adopting an optical transmission channel other than an optical transmission channel used in sending the preset optical information.

7. A connection information receiving method applied to a central processing device, comprising:
acquiring preset optical information sent by an optical module, the preset optical information being used for indicating a connection status of the optical module, and the preset optical information comprising information relating to a status of a transmission device connected to the optical module; and
determining the connection status of the optical module based on the preset optical information.

8. The connection information receiving method of claim 7, wherein the preset optical information comprises at least one of:
wavelength information, transmitted optical power information, or laser bias current information for sending the preset optical information.

9. The connection information receiving method of claim 7, wherein acquiring the preset optical information sent by the optical module comprises at least one of:
acquiring the preset optical information sent by the optical module according to a preset mode; or
acquiring the preset optical information which is sent by the optical module and carries a preset identifier.

10. The connection information receiving method of claim 7, wherein after acquiring the preset optical information sent by the optical module, the connection information receiving method further comprises:
detecting whether the preset optical information is sent according to the preset mode and/or whether the preset optical information carries the preset identifier;
in response to that the preset optical information is sent according to the preset mode and/or the preset optical information carries the preset identifier, determining the connection status of the optical module based on the preset optical information; and
in response to that the preset optical information is not sent according to the preset mode and the preset optical information does not carry the preset identifier, ignoring the preset optical information, and/or issuing a warning.

11. The connection information receiving method of claim 7, wherein determining the connection status of the optical module based on the preset optical information comprises:
responsive to at least one of a condition that the preset optical information is not received for a preset time interval or a condition that the received preset optical information conforms to a preset abnormal status, determining that the connection status of the optimal module is abnormal.

12. An optical module comprising an optical sending unit, wherein the optical sending unit is configured to:
send preset optical information for indicating a current connection status of the optical module, the preset optical information comprising information relating to a status of a transmission device connected to the optical module.

13. The optical module of claim 12, wherein the optical sending unit sending the preset optical information for indicating the current connection status of the optical module comprises at least one of:
sending the preset optical information responsive to that the optical module is powered on; or
sending the preset optical information every preset time interval after the optical module is powered on.

14. The optical module of claim 12, wherein the preset optical information comprises at least one of:
wavelength information, transmitted optical power information, or laser bias current information for sending the preset optical information.

15. The optical module of claim 12, wherein the optical sending unit sending the preset optical information for indicating the current connection status of the optical module comprises at least one of:
sending the preset optical information according to a preset mode; or
carrying a preset identifier by the sent preset optical information.

16. A central processing device, comprising:
an optical receiving unit configured to acquire preset optical information sent by an optical module, the preset optical information being used for indicating a connection status of the optical module, and the preset optical information comprising information relating to a status of a transmission device connected to the optical module; and
a processing unit configured to determine the connection status of the optical module based on the preset optical information.

17. The central processing device of claim 16, wherein the preset optical information comprises at least one of:
wavelength information, transmitted optical power information, or laser bias current information for sending the preset optical information.

18. The central processing device of claim 16, wherein the optical receiving unit acquiring the preset optical information sent by the optical module comprises at least one of:
acquiring the preset optical information sent by the optical module according to a preset mode; or
acquiring the preset optical information which is sent by the optical module and carries a preset identifier.

19. The central processing device of claim 16, wherein after the optical receiving unit acquires the preset optical information sent by the optical module, the processing unit is further configured to:
detect whether the preset optical information is sent according to the preset mode and/or whether the preset optical information carries the preset identifier;
in response to that the preset optical information is sent according to the preset mode and/or the preset optical information carries the preset identifier, determine the connection status of the optical module based on the preset optical information; and
in response to that the preset optical information is not sent according to the preset mode and the preset optical information does not carry the preset identifier, ignoring the preset optical information, and/or issuing a warning.

20. The central processing device of claim 16, wherein the processing unit determining the connection status of the optical module based on the preset optical information comprises:
responsive to at least one of a condition that the preset optical information is not received for a preset time interval or a condition that the received preset optical information conforms to a preset abnormal status, determining that the connection status of the optical module is abnormal.

21. A wavelength division multiplexing system, comprising:
an optical module configured to send preset optical information for indicating a current connection status of the optical module; and
a central processing device configured to acquire the preset optical information sent by the optical module, the preset optical information being used for indicating a connection status of the optical module, and the preset optical information comprising information relating to a status of a transmission device connected to the optical module; and the central processing device being further configured to determine the connection status of the optical module based on the preset optical information.

22. The wavelength division multiplexing system of claim 21, wherein
the optical module performs at least one of the following operations including: sending the preset optical information according to a preset mode, or carrying a preset identifier by the sent preset optical information,
wherein after acquiring the preset optical information sent by the optical module, the central processing unit is further configured to: detect whether the preset optical information is sent according to the preset mode and/or whether the preset optical information carries the preset identifier; in response to that the preset optical information is sent according to the preset mode and/or the preset optical information carries the preset identifier, determine the connection status of the optical module based on the preset optical information; and in response to that the preset optical information is not sent according to the preset mode and the preset optical information does not carry the preset identifier, ignore the preset optical information, and/or issue a warning.

23. The wavelength division multiplexing system of claim 21, wherein the wavelength division multiplexing system further comprises an optical multiplexing unit and an optical demultiplexing unit connected to the optical multiplexing unit through an optical fiber,
wherein the optical module comprises a plurality of optical modules, the plurality of optical modules are respectively connected to the optical multiplexing unit, and the central processing device is connected to the optical demultiplexing unit.

24. A transmission device, comprising an optical module of any one of claims 12-15, or comprising a central processing device of any one of claims 16-20.

25. An optical module, comprising a memory, a processor, and a computer program which is stored in the memory and is executable on the processor, wherein when executing the computer program, the processor implements a connection information sending method of any one of claims 1-6.

26. A central processing device, comprising a memory, a processor, and a computer program which is stored in the memory and is executable on the processor, wherein when executing the program, the processor implements a connection information receiving method of any one of claims 7-11.

27. A computer readable storage medium comprising a computer program that when executed by a processor, implements an operation of a connection information sending method of any one of claims 1-6, or implements an operation of a connection information receiving method of any one of claims 7-11.
